# FASCICULE DE BREVET EUROPEEN

(11) **EP 0 487 415 B1**
(45) Date de publication et mention de la délivrance du brevet: **15.03.1995**
(21) Numéro de dépôt: 91403124.0
(22) Date de dépôt: 20.11.1991
(51) Int. Cl.: G01B 21/04

(54) **Procédé de contrôle de mesures dimensionnelles de pièces de fonderie**
Verfahren zur Regelung der dimensionalen Messung von Gussstücken
Control procedure for the dimensional measurement of cast parts

(30) Priorité: 21.11.1990 FR 9014495
(43) Date de publication de la demande: 27.05.1992
(73) Titulaire: HISPANO-SUIZA, F-92213 Saint Cloud (FR)
(72) Inventeur: Girard, Francis, F-78220 Viroflay (FR); Guezou, José, F-95000 Jouy le Moutier (FR); Manceau, Jean-Claude, F-95150 Taverny (FR)
(74) Mandataire: Berrou, Paul

(56) Documents cités:
- GB-A- 2 194 367
- COMPUTERS IN INDUSTRY, vol. 7, no. 1, février 1986, Amsterdam, NL, pages 65-71; ERDELYI ET AL: "Monitoring Tasks on Boring and Milling Production Cells"
- AUTOMATISIERUNGSTECHNISCHE PRAXIS - ATP, vol. 30, no. 8, août 1988, München, DE, pages 397-400; HAMMER ET AL: "Ein Expertensystem für die Einrichtung und die Endkontrolle an CNC-Maschinen"'
- ZWF CIM ZEITSCHRIFT FUR WIRTSCHAFTLICHE FERTIGUNG UND AUTOMATISIERUNG, vol. 86, no. 3, mars 1991, München, DE, pages 143-145; SCHITTENHELM: "Einrichten von CNC-Drehmaschinen mit Bedienerunterstützung"

## Description

L'invention concerne un procédé de contrôle de mesures dimensionnelles de pièces de fonderie s'appliquant notamment aux pièces de fonderie des matériels aéronautiques.

Il est usuel dans le domaine de l'aéronautique de procéder d'une part à des contrôles de pièces brutes de fonderie et, d'autre part, d'effectuer aussi des contrôles sur les pièces finies.

Ces contrôles sont généralement de deux types :
- un premier type consiste à vérifier l'aspect de la pièce et cela se traduit par une vérification de l'ébarbage, de l'état de surface et de la propreté des canalisations,
- un deuxième type consiste en un contrôle dimensionnel, soit par prise de cotes (avec pied à coulisse, pied de profondeur), soit par un tracé de forme et d'axe.

Les deux types de contrôle sont effectués généralement sur la première pièce réalisée d'une nouvelle fabrication. En effet, cette pièce fait l'objet d'un contrôle dimensionnel complet et parfois même d'une dissection. Le contrôle est renouvelé ensuite sur des pièces prélevées au hasard de la fabrication.

Jusqu'à ce jour, ces contrôles étaient réalisés de manière entièrement manuelle. A cette fin, la pièce à contrôler est peinte localement pour mieux visualiser le marquage effectué préalablement par un opérateur à l'aide d'une pointe à tracer ou d'un compas.

La précision du tracé est évaluée à 5/100ème de mm et la finesse du tracé à environ 1/10ème de mm.

Ces opérations représentent une charge de travail importante effectuée par du personnel qualifié et nécessitent de :
- placer la pièce sur les départs d'usinage,
- tracer les parties extérieures (les plus éloignées possible) pour vérifier que la pièce n'a pas de déformation après traitement thermique,
- tracer dans un plan les axes et les traits d'encadrement des alésages,
- basculer la pièce dans un autre plan et refaire l'opération précédente,
- tracer et mesurer quelques formes.

Ces contrôles sont par conséquent longs et fastidieux, ce qui augmente de façon considérable les délais de production et les coûts de fabrication.

A titre d'exemple, le contrôle dimensionnel d'une pièce brute peut durer plusieurs semaines.

Par ailleurs, on connaît par GB-A-2 194 367 un procédé de contrôle de mesures dimensionnelles de pièces dans lequel les pièces ont été initialement définies dans un fichier d'aide à la conception assistée par ordinateur (CAO), et comportant les étapes suivantes :
- positionnement de la pièce sur un support et localisation de cette dernière dans l'espace,
- sélection des zones à contrôler,
- analyse de forme à partir de moyens de traitement de données, de moyens de mesures tridimensionnelles et de moyens de commande, consistant pour chaque zone sélectionnée à :
   . réaliser des mesures tridimensionnelles,
   . mémoriser ces points de mesure,
   . comparer les points de mesure aux définitions données par le fichier CAO,
puis, lorsque toutes les zones ont été analysées :
- accepter ou ne pas accepter la pièce en fonction de tous les résultats de comparaison.

L'invention permet d'adapter un tel procédé au contrôle de pièces de fonderie. Dans ce but, le fichier CAO comporte la définition des pièces brutes de fonderie et des pièces finies et la comparaison des points de mesure au fichier CAO consiste à :
- effectuer une première comparaison entre les points de mesure et la définition de la pièce brute du fichier CAO,
- effectuer une deuxième comparaison avec la définition de la pièce finie du fichier CAO dans le cas où le résultat de la première comparaison n'est pas dans la plage de tolérance choisie,
- mémoriser les défauts et/ou les écarts obtenus après cette deuxième comparaison.

Selon une autre caractéristique de l'invention, le procédé comporte une étape préliminaire consistant à vérifier la présence des défauts d'usinage de la pièce à contrôler.

Selon une autre caractéristique de l'invention, la vérification de la présence des défauts d'usinage consiste à :
- définir un plan de départ,
- définir un système d'orientation.

D'autre part, l'étape préliminaire consiste en outre à vérifier le positionnement de la pièce sur le montage.

Le procédé selon l'invention consiste en outre à l'issue de la deuxième comparaison, dans le cas où la pièce n'est pas dans la plage de tolérance choisie, à réaliser une opération de rebalancement de la pièce et à rejeter la pièce dans la mesure où, après l'opération de balancement, la pièce n'est pas conforme.

Le procédé consiste selon une autre caractéristique de l'invention, dans le cas où l'opération de rebalancement n'aboutit pas à un rejet de la pièce, à calculer le recalage à réaliser pour rattraper les défauts.

Les opérations de mesure, traitement et comparaison sont réalisées zone après zone.

Les opérations de mesure sont effectuées en réalisant un balayage des surfaces de la zone à contrôler par les moyens de mesure.

les mesures d'une zone à l'autre sont obtenues en opérant des déplacements relatifs entre la pièce et les moyens de mesure.

D'autres caractéristiques et avantages de l'invention apparaîtront à la lecture de la description faite à titre illustratif et nullement limitatif, en référence aux dessins annexés sur lesquels :
- la figure 1 représente le schéma d'un dispositif de mise en oeuvre du procédé conforme à l'invention,
- les figures 2A et 2B représentent, sous forme d'un organigramme, les étapes successives du procédé conforme à l'invention,
- les figures 3A et 3B repésentent des schémas correspondant à la visualisation de deux zones.

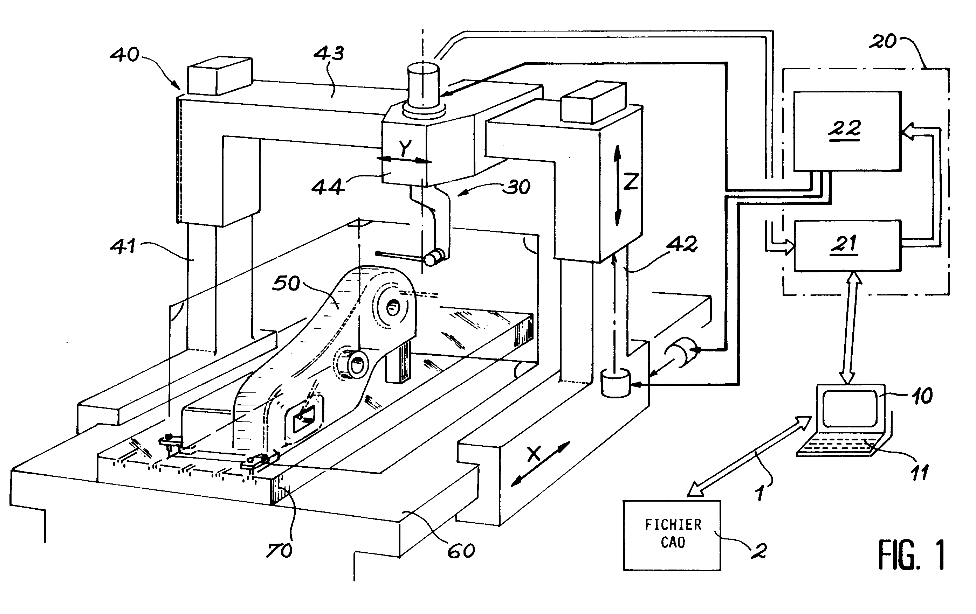

La figure 1 permet d'illustrer schématiquement un dispositif de mise en oeuvre du procédé conforme à l'invention.

Des moyens de traitement localisés 10 des mesures sont prévus. Ces moyens peuvent, à titre d'exemple, être réalisés par un ordinateur ou micro-ordinateur local relié par une ligne de transmission de données numériques à un système central 2 contenant le fichier CAO de définition des pièces. En fait, ce fichier qui est défini lors de la conception des pièces est constitué d'un fichier de définition des pièces brutes et d'un fichier de définition des pièces finies.

Par des techniques connues de superposition d'images, un opérateur peut, à partir du clavier 11 connecté au micro-ordinateur, obtenir sur l'écran une présentation graphique de la pièce à contrôler telle que définie dans le fichier CAO et telle que définie par les mesures effectuées.

Un opérateur peut, à partir du clavier, commander la mise en oeuvre du procédé. Cette mise en oeuvre est réalisée par les moyens de traitement 10.

Des moyens supplémentaires sont prévus à cette fin. En effet, pour la mise en oeuvre de l'étape de sélection des zones, des moyens mécaniques et électroniques permettent, sur commande des moyens de traitement, d'obtenir des déplacements relatifs des moyens de mesure par rapport à la pièce à contrôler.

Des moyens de prétraitement et de commande 20 sont prévus afin de réaliser une liaison entre les moyens de mesure 30 et les moyens de traitement local 10. Ces moyens comportent un circuit de conversion 21 et un circuit de commande 22.

Ainsi, les données de commande envoyées par les moyens de traitement 10 sont transformées par le circuit de commande 22 en signaux analogiques de commande. Ce circuit est constitué d'une électronique de puissance apte à mettre en fonction des moteurs de déplacement de l'ensemble de mesure.

Le circuit de conversion 21 permet d'assurer une fonction de conditionnement et de conversion des signaux analogiques de mesure en signaux numériques.

Les moyens de mesure 30 sont placés sur un portique constitué de deux montants 41, 42, montés de manière à pouvoir se déplacer suivant un axe X.

Un montant 43 surmontant les montants 41, 42, peut se déplacer suivant un axe Z. De façon plus précise, les moyens de mesure sont accrochés à une pièce 44 qui peut coulisser sur le montant transversal 43 de manière à obtenir des déplacements selon un axe Y.

Les moyens de mesure 30 sont constitués d'un capteur tridimensionnel. Ils peuvent être également constitués d'un robot.

La pièce à contrôler 50 est placée sur un support de montage muni d'une tablette de fixation 70 et de repérage par rapport aux axes X, Y, Z et par rapport à un point origine constitué par un point fixe dans l'espace ou par un point fixe de la tablette.

La pièce 50 brute de fonderie est montée par un opérateur sur la tablette 70. Un premier contrôle consiste pour l'opérateur à vérifier tout d'abord la présence des départs d'usinage. Ces départs sont constitués d'un plan de départ et d'un système d'orientation composé soit de deux trous de centrage, soit d'un centrage et d'une orientation.

L'opérateur vérifie également la stabilité de la pièce sur le support.

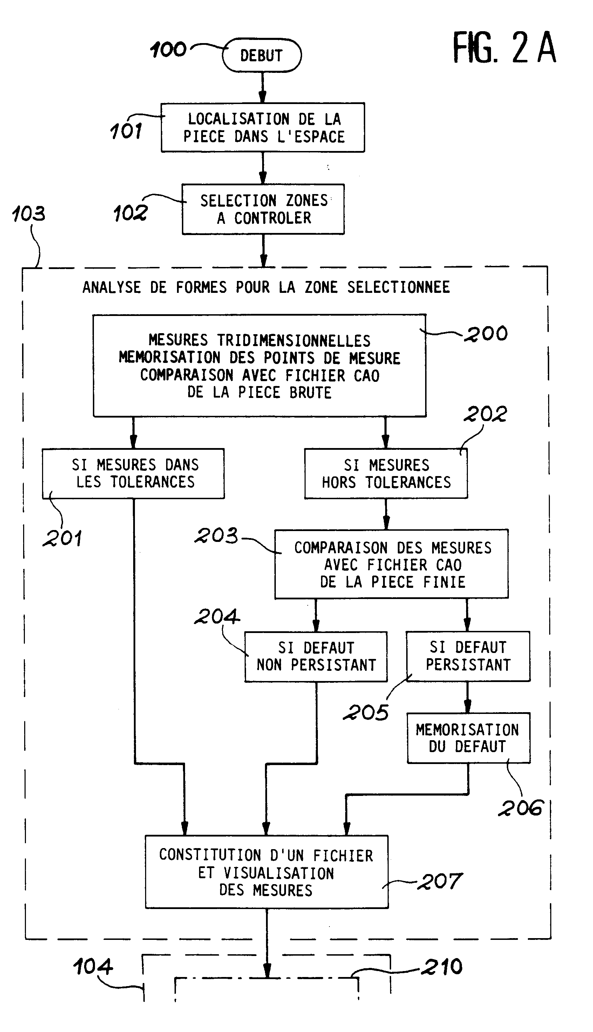

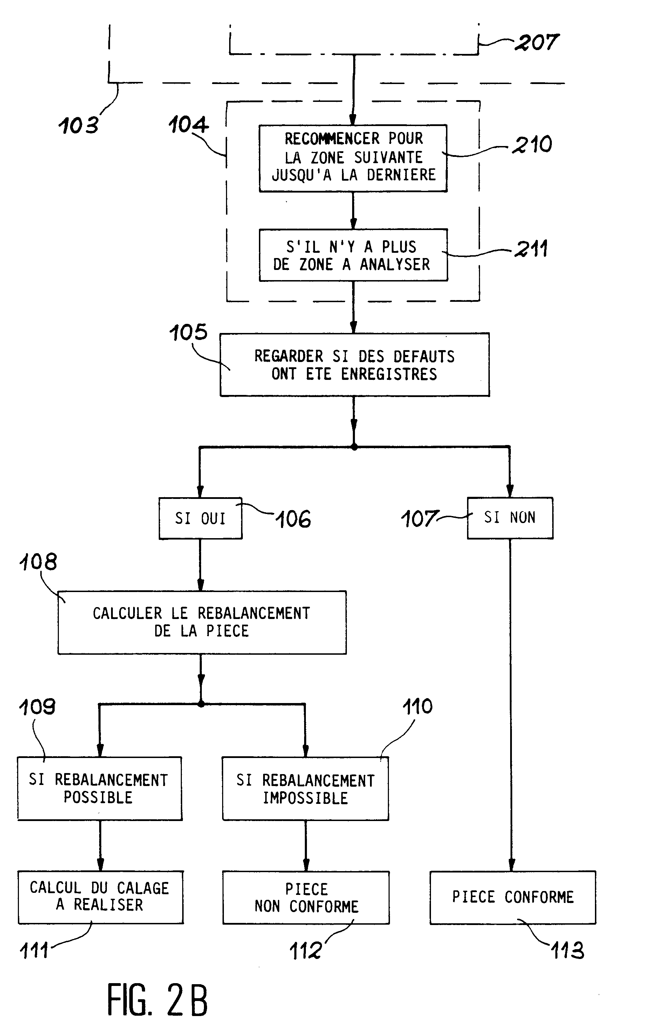

Comme on peut le voir à partir de l'ordinogramme représenté sur les figures 2A et 2B et les étapes mentionnées, le procédé de contrôle consiste ensuite à réaliser de façon automatique les étapes suivantes :
- déterminer la localisation de la pièce dans l'espace par rapport au repère fixé (étape 101),
- sélectionner une zone à contrôler (102),
- réaliser une analyse de formes pour la zone sélectionnée.

L'analyse de formes (103) consiste à :
- réaliser des mesures tridimensionnelles dans la zone sélectionnée (200),
- mémoriser les points de mesure (200),
- comparer les mesures réalisées avec la définition donnée par le fichier CAO et à mémoriser les résultats de comparaison (200), puis
- en fonction de ces résultats, à garder ou à rejeter la pièce.

De préférence, on constitue un fichier qui va contenir les données de mesure (207).

De préférence également, les zones contrôlées (étape 207) sont visualisées sur l'écran du micro-ordinateur 10.

Le procédé consiste à recommencer l'analyse successivement pour toutes les zones sélectionnées, jusqu'à ce qu'il n'y ait plus de zone (104).

A la fin de l'analyse de la zone choisie, les moyens de mesure sont déplacés automatiquement pour réaliser des mesures sur la nouvelle zone sélectionnée à partir du clavier (210), un contrôle sur le nombre de zones étant effectué (211).

Pour chaque zone analysée, et dans le cas où des défauts ont été enregistrés (105, 106), le procédé consiste à :
- calculer le rebalancement de la pièce par une méthode connue (108).

On rappelle que le balancement d'une pièce permet de connaître la position dans l'espace du brut réel de la pièce par rapport à son volume théorique, ses tolérances et ses références.

Si après le calcul du rebalancement on obtient une valeur de brut réel qui reste dans le volume théorique (109), le procédé peut consister ensuite à effectuer un calcul du calage à réaliser (111), afin de remettre la pièce en conformité avec les données CAO de la pièce brute. Le choix d'effectuer ce calcul est laissé à l'opérateur qui pourra, à partir de son clavier, commander la mise en oeuvre de ce calcul.

Dans le cas où le rebalancement n'est pas possible (110) ou pas souhaitable, la pièce est déclarée non conforme (112). Dans le cas contraire, elle est déclarée conforme.

Bien entendu, dans la mesure où aucun défaut n'a été enregistré (107), les résultats de comparaison avec la définition du fichier CAO ayant été positifs, la pièce est déclarée conforme (113).

Préférentiellement, l'étape de comparaison (200) comporte une ou deux sous-étapes, comme cela va être précisé dans la suite :
- on procède à une première comparaison entre les points de mesure et la définition de la pièce brute du fichier CAO,
- si à l'issue de cette comparaison les résultats sont dans la plage de tolérance choisie (201), le pièce est conforme,
- si les résultats sont en dehors de cette plage (202), on procède à une deuxième comparaison avec la définition de la pièce finie du fichier CAO (203),
- si le ou les défaut(s) persiste(nt) après cette comparaison (205), le procédé se poursuit par la mémorisation des défauts et/ou des écarts obtenus (206).

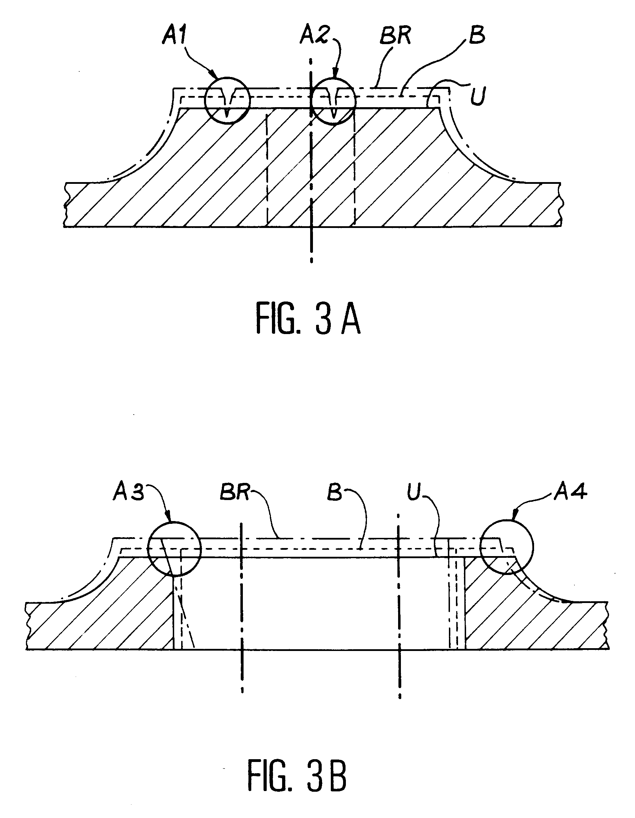

On a représenté à titre d'exemple sur la figure 3A, le schéma d'une zone visualisée sur écran montrant un bossage plein.

La forme usinée est repérée par la référence U, la forme brute réelle est repérée par la référence BR et la forme brute est repérée par la référence B. Ces trois formes sont superposées et permettent de mettre en évidence deux anomalies.

Le défaut A1 se révèle inacceptable parce qu'il persiste sur la définition de la pièce finie.

Le défaut A2 se révèle acceptable car il disparaît totalement lors du perçage.

La figure 3B représente un autre exemple de zone visualisée. Il s'agit d'un trou ablong associé à un bossage.

Comme pour la figure 3A, la forme usinée porte la référence U, la forme brute réelle porte la référence BR et la forme brute est repérée par la référence B.

Cet exemple met en évidence deux types d'anomalies sur la forme visualisée.

Le défaut A3 se révèle inacceptable parce qu'il persiste sur la définition de la pièce brute.

Le défaut A4 se révèle acceptable car il ne fait que limiter une surface d'appui.

## Revendications

1. Procédé de contrôle de mesures dimensionnelles de pièces de fonderie dans lequel les pièces ont été initialement définies dans un fichier d'aide à la conception assistée par ordinateur (CAO), comportant les étapes suivantes :
- positionnement de la pièce sur un support et localisation de cette dernière dans l'espace,
- sélection des zones à contrôler,
- analyse de formes à partir de moyens de traitement de données, de moyens de mesures tridimensionnelles et de moyens de commande, consistant pour chaque zone sélectionnée à :
. réaliser des mesures tridimensionnelles,
. mémoriser ces points de mesure,
. comparer les points de mesure aux définitions données par le fichier CAO,
puis, lorsque toutes les zones ont été analysées :
- accepter ou ne pas accepter la pièce en fonction de tous les résultats de comparaison,
caractérisé en ce que ledit fichier CAO comporte la définition des pièces brutes de fonderie et des pièces finies et en ce que la comparaison des points de mesure au fichier CAO consiste à :
- effectuer une première comparaison entre les points de mesure et la définition de la pièce brute du fichier CAO,
- effectuer une deuxième comparaison avec la définition de la pièce finie du fichier CAO dans le cas où le résultat de la première comparaison n'est pas dans la plage de tolérance choisie,
- mémoriser les défauts et/ou les écarts obtenus après cette deuxième comparaison.

2. Procédé de contrôle selon la revendication 1, caractérisé en ce qu'il comporte une étape préliminaire consistant à vérifier la présence des défauts d'usinage de la pièce à contrôler.

3. procédé de contrôle selon la revendication 2, caractérisé en ce que la vérification de la présence des défauts d'usinage consiste à :
- définir un plan de départ,
- définir un système d'orientation.

4. Procédé de contrôle selon la revendication 2, caractérisé en ce que l'étape préliminaire consiste en outre à vérifier le positionnement de la pièce sur le montage.

5. Procédé de contrôle selon l'une quelconque des revendications 1 à 4, caractérisé en ce qu'il consiste en outre à l'issue de la deuxième comparaison, dans le cas où la pièce n'est pas dans la plage de tolérance choisie, à réaliser une opération de rebalancement de la pièce , et à rejeter la pièce dans la mesure où, après l'opération de balancement, la pièce n'est pas conforme.

6. Procédé de contrôle selon la revendication 5, caractérisé en ce que dans le cas où l'opération de rebalancement n'aboutit pas à un rejet de la pièce, il consiste à calculer le recalage à réaliser pour rattraper les défauts.

7. Procédé de contrôle selon l'une quelconque des revendications 1 à 6, caractérisé en ce que les opérations de mesure, traitement et comparaison sont réalisées zone après zone.

8. Procédé de contrôle selon l'une quelconque des revendications 1 à 7, caractérisé en ce que les opérations de mesure sont effectuées en réalisant un balayage des surfaces de la zone à contrôler par les moyens de mesure.

9. Procédé de contrôle selon l'une quelconque des revendications 1 à 8, caractérisé en ce que les mesures d'une zone à l'autre sont obtenues en opérant des déplacements relatifs entre la pièce et les moyens de mesure.

## Claims

1. Method for checking dimensional measurements of castings, in which the components have initially been defined in a computer aided design (CAD) file, including the following steps:
- positioning the component on a support and locating this component in space,
- selecting zones to be checked,
- analysing shapes on the basis of data-processing means, three-dimensional measuring means, and control means, consisting for each selected zone in:
. taking three-dimensional measurements,
. storing these measurement points in memory,
. comparing the measurement points with the definitions given by the CAD file,
then, when all the zones have been analysed:
- accepting or not accepting the component depending on all the results of the comparison,
characterized in that the said CAD file includes the definition of the crude castings and of the finished components and in that the comparison of measurement points with the CAD file consists in:
- making a first comparison between the measurement points and the definition of the crude component from the CAD file,
- making a second comparison with the definition of the finished component from the CAD file in the case where the result of the first comparison is not within the chosen tolerance band,
- storing the defects and/or discrepancies obtained after this second comparison in memory.

2. Checking method according to Claim 1, characterized in that it includes a preliminary step consisting in checking for the presence of machining defects in the component to be checked.

3. Checking method according to Claim 2, characterized in that checking for the presence of machining defects consists in:
- defining an origin plane,
- defining an orientation system.

4. Checking method according to Claim 2, characterized in that the preliminary step further consists in checking the positioning of the component on the fixture.

5. Checking method according to any one of Claims 1 to 4, characterized in that it further consists, at the end of the second comparison, in the event of the component not being within the chosen tolerance band, in undertaking an operation of rebalancing the component, and in rejecting the component in so far as, after the balancing operation, the component does not comply.

6. Checking method according to Claim 5, characterized in that, in the event of the rebalancing operation not ending up with the component being rejected, it consists in calculating the make good to be undertaken in order to take up the defects.

7. Checking method according to any one of Claims 1 to 6, characterized in that the measuring, processing and comparison operations are done zone after zone.

8. Checking method according to any one of Claims 1 to 7, characterized in that the measuring operations are undertaken by making the measurement means scan the surfaces of the zone to be checked.

9. Checking method according to any one of Claims 1 to 8, characterized in that the measurements from one zone to another are obtained by causing relative movements between the component and the measuring means.

## Patentansprüche

1. Verfahren zur Kontrolle der dimensionellen Maße von Gußteilen, bei dem die Teile zuerst mittels rechnergestützter Konstruktion (CAD) in einer Datei festgelegt wurden, aufweisend die folgenden Schritte:
- Positionierung des Teiles auf einem Träger und Ortsbestimmung im Raum von letzterem,
- Wahl der zu kontrollierenden Zonen,
- Formenanalyse ausgehend von einer Datenverarbeitungseinheit, einer dreidimensionalen Meßvorrichtung und einer Befehlsvorrichtung, für jede gewählte Zone, bestehend aus:
· Ausführung von dreidimensionalen Messungen,
· Speicherung dieser Meßpunkte,
· Vergleich der Meßpunkte mit den Festlegungen, die durch die CAD-Datei gegeben sind,
darauffolgend, wenn alle Zonen analysiert wurden:
- Annahme oder Zurückweisung des Teiles abhängig von allen Vergleichsergebnissen,
dadurch **gekennzeichnet,**
daß die CAD-Datei die Festlegung von Gußrohlingen und Fertigteilen enthält, und daß der Vergleich von Meßpunkten mit der CAD-Datei besteht aus:
- Ausführung eines ersten Vergleichs zwischen den Meßpunkten und der Rohlings-Festlegung der CAD-Datei,
- Ausführung eines zweiten Vergleichs mit der Fertigteil-Festlegung der CAD-Datei für den Fall, daß das Ergebnis des ersten Vergleichs nicht innerhalb des gewählten Toleranzbereiches liegt,
- Speicherung der Fehler und/oder der Abweichungen, die durch diesen zweiten Vergleich erhalten wurden.

2. Kontrollverfahren nach Anspruch 1,
dadurch **gekennzeichnet,**
daß es einen vorhergehenden Schritt umfaßt, der in der Prüfung des Vorhandenseins von Bearbeitungsfehlern des zu kontrollierenden Teils besteht.

3. Kontrollverfahren nach Anspruch 2,
dadurch **gekennzeichnet,**
daß die Prüfung des Vorhandenseins von Bearbeitungsfehlern besteht aus:
- Festlegung einer Ausgangsebene,
- Festlegung eines Orientierungssystems.

4. Kontrollverfahren nach Anspruch 2,
dadurch **gekennzeichnet,**
daß der vorhergehende Schritt darüber hinaus aus einer Prüfung der Positionierung des Teiles auf der Anbringung besteht.

5. Kontrollverfahren nach einem der Ansprüche 1 bis 4,
dadurch **gekennzeichnet,**
daß es weiterhin darin besteht, daß am Ende des zweiten Vergleichs für den Fall, daß das Teil nicht innerhalb des gewählten Toleranzbereiches liegt, ein Ausgleichsvorgang des Teiles ausgeführt wird, und das Teil für den Fall, daß nach dem Ausgleichsvorgang das Teil nicht vorschriftsmäßig ist, zurückgewiesen wird.

6. Kontrollverfahren nach Anspruch 5,
dadurch **gekennzeichnet,**
daß für den Fall, daß der Ausgleichsvorgang nicht zu einer Zurückweisung des Teiles führt, es darin besteht, daß die Abgleichmaßnahme berechnet wird, die zur Behebung der Fehler auszuführen ist.

7. Kontrollverfahren nach einem der Ansprüche 1 bis 6,
dadurch **gekennzeichnet,**
daß die Meß-, Verarbeitungs- und Vergleichsvorgänge zonenweise ausgeführt werden.

8. Kontrollverfahren nach einem der Ansprüche 1 bis 7,
dadurch **gekennzeichnet,**
daß die Meßvorgänge ausgeführt werden, indem eine Oberflächenabtastung der zu kontrollierenden Zone durch die Meßeinrichtung ausgeführt wird.

9. Kontrollverfahren nach einem der Ansprüche 1 bis 8,
dadurch **gekennzeichnet,**
daß die Messungen von einer Zone zu einer weiteren dadurch erhalten werden, daß Relativverschiebungen zwischen dem Teil und der Meßeinrichtung ausgeführt werden.
